# EUROPEAN PATENT APPLICATION

(11) **EP 0 869 224 A1**
(43) Date of publication of application: **07.10.1998**
(21) Application number: 97200884.1
(22) Date of filing: 28.03.1997
(51) Int. Cl.: E02F 1/00, E02D 15/10, B09B 1/00

(54) **Method and device for dumping dredged materials**

(71) Applicant: VAN OORD ACZ B.V., 4207 HN Gorinchem (NL)
(72) Inventor: Lindo, Mark Henry, 2582 JS Den Haag (NL); Peerlkamp, Kees Peter, 4286 CR Almkerk (NL)
(74) Representative: Vollebregt, Cornelis Jacobus, Ir.

(57) **Abstract**

The invention relates to a method and a device for dumping dredged materials and the like on a bottom present under the water surface. The dredged materials or the like are delivered under the water surface by means of a conveyor pipeline (9) comprising a portion extending in the direction of the bottom under said water surface. The part of the conveyor pipeline (9) extending under the water surface is at least partly surrounded by a screen (6) which extends to near the bottom. The screen is attached to a floating body (2). Means (7) by which the bottom end of the screen (6) is adjustable for height with respect to the floating body (2) are connected to the bottom end of the screen (6).

## Description

The invention relates to a method for dumping dredged materials and the like on a bottom present under the water surface, whereby said dredged materials or the like are delivered under the water surface by means of a conveyor pipeline comprising a portion extending in the direction of the bottom under said water surface.

In many cases materials dredged up at particular sites are dumped on the bottom at other locations, which are usually designated in advance. In particular when dealing with mixtures which are rich in silt/clay there is a problem of at least part of the material mixing with the water, which causes the water to get muddy. This is an undesirable phenomenon and may cause serious damage to the biological life on and in the water if it takes place on a large scale. When the muddy water mass furthermore extends a certain distance in vertical direction, the dredged materials may be dispersed over an undesirably large area by the waves and currents caused by the wind, the tidal movement, river currents and the like. In an attempt to avoid said muddying of the water due to the water being mixed with dumped materials as much as possible, the discharge end of the conveyor pipeline is usually positioned as closely to the bottom surface as possible. In order to make it possible to work economically the exit velocity of the dredged materials from the conveyor pipeline is generally rather high, which leads to turbulence near the discharge end of the conveyor pipeline and thus to the dredged materials being mixed with the water, which in turn results in the water getting muddy and the dredged materials being dispersed. In addition to that the gases that may occur in mixtures which are rich in silt escape in the form of gas bubbles near the discharge end of the conveyor pipeline, which enhances the effect of the water getting muddy over a comparatively large distance in vertical direction.

The object of the invention is to prevent, or in any case to alleviate the above-described drawbacks of the methods that have been usual so far.

According to the invention the part of the conveyor pipeline extending under the water surface is at least partly surrounded by a screen which extends to near the bottom.

During operation the dredged materials or the like materials to be dumped will be delivered within said screen and form a mixture with the water present within said screen, whereby the density of said mixture will be greater than that of the water surrounding said screen. Gas bubbles that may be released can move out in upward direction within the space surrounded by the screen. Once a certain equilibrium has formed within the screen after the method has been started, the mixture within the screen will constantly sink and flow out in radially outward direction at a low velocity through the gap formed between the bottom edge of the screen and the bottom. In practice it has become apparent that undesirable dispersing of the materials being dumped is prevented thereby, so that the dumped materials will settle down at the intended location in a controlled manner without undesirable muddying of the water.

In order to obtain an optimum formation of the mixture within the space enclosed by the screen the dredged materials or the like are thereby discharged into the space surrounded by the screen via a dispersing element provided at the discharge end of the conveyor pipeline, in such a manner that the dredged materials or the like are dispersed over the space enclosed by the screen.

The horizontal sectional area of the space enclosed by the screen is preferably more than 150 times larger than the sectional area of the conveyor pipeline thereby, in order to obtain a sufficiently large area for forming a mixture of water and dumped materials, which can gradually move downward within the space enclosed by the screen and exit under the bottom edge of the screen at a low velocity in the form of a density current.

According to another aspect of the invention a device which is particularly suitable for carrying out the method according to the invention is obtained when the device is provided with a screen of a flexible material which is attached to a floating body, whilst means by which the bottom end of the screen is adjustable for height with respect to the floating body are connected to the bottom end of said screen.

In this manner a device of simple construction can be obtained, wherein the position of the bottom end of the screen with respect to the bottom can be adjusted in a simple manner in order to realize an optimum and controlled gap width, whilst the device can be given a compact form suitable for transport and storage by folding up the screen of flexible material.

The invention will be explained in more detail hereafter with reference to an embodiment of the construction according to the invention diagrammatically illustrated in the accompanying Figures.

Figure 1 is a diagrammatic perspective view of the device according to the invention.

Figure 2 is a diagrammatic sectional view of Figure 1.

Figure 3 is a diagrammatic plan view of Figure 2.

The device 1 according to the invention which is shown in the Figures comprises an annular (in the illustrated embodiment) floating body 2, which will float on a water surface 3 when the device is being used. Attached to the floating body 2 are regularly spaced-apart chains or cables 4, which extend in downward direction during use of the device, by means of which a few vertically spaced-apart annular elements 5 are suspended from said floating body. Also suspended from the floating body is the upper end of a cylindrical screen 6 of a flexible material, plastic material, for example, which is kept in the desired cylindrical shape by means of the annular floating body and the annular elements 5. The screen will be made of a material which is at least substantially impervious to the mixture of dumped materials and water being formed within the screen during operation.

It should be noted, however, that the sectional shape of the screen, and thus the shape of the floating body and the elements 5, does not necessarily have to be circular, but that any other closed shape, such as an oval, rectangular, polygonal or similar shape will be possible within the spirit and scope of the invention.

Hoisting cables 7, which may extend upward from said annular element and be guided thereby by guide eyes 8 or the like attached to the annular element 5 positioned thereabove and/or to the floating body 2, are furthermore attached to the lowermost annular element 5. The parts of the hoisting cables or chains located above the water surface are furthermore connected to a hoisting device (not shown).

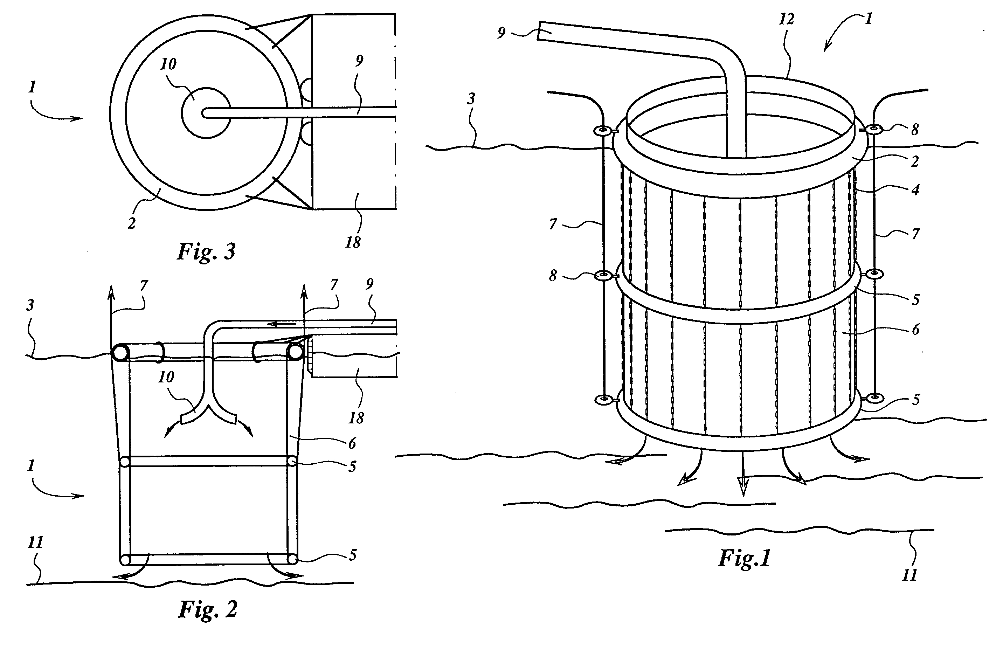

Device 1 may be coupled to a pontoon 18 or other vessel during use, as is diagrammatically shown in Figures 2 and 3. Such a vessel may thereby be used to position and hold device 1 at the desired location.

A conveyor pipeline 9, which may also be supported on said vessel, comprises a part which extends vertically downward within screen 6 and which opens into a dispersing element or diffuser 10.

The diameter of the space enclosed by screen 6, measured in horizontal direction, is preferably more than 150 times the diameter of conveyor pipeline 9. During operation the discharge end of the conveyor pipeline 9 or the diffuser 10 located within the screen will furthermore be spaced from the water surface by a distance which amounts to approximately one third of the height of the space enclosed by the screen 6.

When the device is to be used the bottom end of the screen 6, made up of the lowermost ring 5 in this embodiment, will furthermore be positioned at a desired, relatively small distance from the bottom surface 11 by means of hoisting cables 7, so that a gap of comparatively small height is formed between said bottom surface 11 and the bottom end of screen 6. When the device is being used dredged materials or similar materials to be dumped will be carried into the space enclosed by screen 6 via conveyor pipeline 9 and be dispersed by means of dispersing element 10, so that a mixture of dumped materials and water is formed within said space, which mixture will have a specific weight which is larger than the specific weight of the water present outside the screen. The mixture formed in this manner will sink within the space enclosed by screen 6, and once a situation of equilibrium is reached after the method has been started, there will be a constant flow of said mixture in radially outward direction under the bottom end of screen 6. Partially because of the comparatively large diameter of screen 6 the velocity at which said mixture moves under the bottom end of screen 6 will be small, so that undesirably muddying of the water outside the screen is prevented and the dumped materials will gradually settle down on the bottom outside the screen.

Air or gases that may be released when the materials to be dumped exit from the dispersing element 10 can move out in upward direction in the form of bubbles.

In order to prevent waves from washing over the floating body 2, which may result in undesirable stirring of the water within the space enclosed by screen 6, an upwardly extending screen 12 may furthermore be placed on the upper side of said floating body 2, as is indicated in Figure 1.

The flexible construction of screen 6 makes it possible to adjust the desired distance from the bottom end of screen 6 to bottom 11 in a simple manner by means of hoisting cables 7, whilst it will also be possible to fold up the screen into a compact package for transport and/or storage purposes.

## Claims

1. A method for dumping dredged materials and the like on a bottom present under the water surface, whereby said dredged materials or the like are delivered under the water surface by means of a conveyor pipeline comprising a portion extending in the direction of the bottom under said water surface, characterized in that the part of the conveyor pipeline extending under the water surface is at least partly surrounded by a screen which extends to near the bottom.

2. A method according to claim 1, characterized in that the dredged materials or the like are thereby discharged into the space surrounded by the screen via a dispersing element provided at the discharge end of the conveyor pipeline, in such a manner that the dredged materials or the like are dispersed over the space enclosed by the screen.

3. A method according to claim 1 or 2, characterized in that said screen surrounds a space which extends from the water surface to near said bottom.

4. A method according to any one of the preceding claims, characterized in that the diameter of the space enclosed by the screen, measured in horizontal direction, is more than 150 times larger than the diameter of the conveyor pipeline.

5. A method according to any one of the preceding claims, characterized in that the materials being dumped are delivered to the space enclosed by said screen at a distance under the water surface which amounts to about one third of the height of the space enclosed by said screen.

6. A device in particular intended for carrying out a method according to any one of the preceding claims, characterized in that said device is provided with a screen of a flexible material which is attached to a floating body, whilst means by which the bottom end of the screen is adjustable for height with respect to the floating body are connected to the bottom end of said screen.

7. A device according to claim 6, characterized in that vertically spaced-apart annular elements, which function to support said screen, are attached to said floating boady by means of flexible connecting elements.

8. A device according to claim 6 or 7, characterized in that hoisting cables or the like are connected to the bottom end of said screen.

9. A device according to any one of the claims 6 - 8, characterized in that a screen extending upwards above said floating body is provided.
